# EUROPÄISCHE PATENTSCHRIFT

(11) **EP 2 686 270 B1**
(45) Veröffentlichungstag und Bekanntmachung des Hinweises auf die Patenterteilung: **28.02.2018**
(21) Anmeldenummer: 12710444.6
(22) Anmeldetag: 13.03.2012
(51) Int. Cl.: C01B 3/24, C01B 3/38

(54) **VERFAHREN ZUR INBETRIEBNAHME AUTOTHERMER REFORMIERUNGSREAKTOREN**
METHOD OF STARTING UP AUTOTHERMAL REFORMING REACTORS
PROCÉDÉ DE MISE EN ROUTE DE RÉACTEURS DE REFORMAGE AUTOTHERMES

(30) Priorität: 17.03.2011 DE 102011014217
(43) Veröffentlichungstag der Anmeldung: 22.01.2014
(73) Patentinhaber: ThyssenKrupp Industrial Solutions AG, 45143 Essen (DE)
(72) Erfinder: JOHANNING, Joachim, 46045 Oberhausen (DE); KEIL, Bernd, 44141 Dortmund (DE)
(74) Vertreter: Brosch, Oliver
(86) Internationale Anmeldenummer: PCT/EP2012/001108
(87) Internationale Veröffentlichungsnummer: WO 2012/123100

(56) Entgegenhaltungen:
- US-A- 3 810 975
- US-A- 6 123 873
- US-A1- 2006 216 562

## Beschreibung

Die Erfindung betrifft ein Verfahren zur Inbetriebnahme eines autothermen Reaktors für die Erzeugung von Synthesegas durch Reformierung von Kohlenwasserstoff-haltigen Einsatzgasen in einer Reaktionskammer, in der Oxidierungs- und Reformierungsreaktionen durchgeführt werden, indem ein Kohlenwasserstoff-haltiges Einsatzgas und Dampf, wobei der Wasserdampfgehalt bezogen auf das Kohlenwasserstoff-haltige Einsatzgas 0 -80 Vol.% beträgt, und ein Oxidator, der einen Sauerstoffgehalt von 10 - 100 Vol. % aufweist, zugeführt werden und ein Produktgas erzeugt wird, wobei zur Inbetriebnahme ein Zündvorgang ausgelöst wird.

Autotherme Reaktoren für die Herstellung von Synthesegasen durch Reformierung von Erdgas benötigen zur Ausbildung einer stabilen selbsthaltenden Reaktion in der primären Reaktionszone, in der das Einsatzgas, das ein Erdgas/Dampf-Gemisch ist, und der Oxidator miteinander in Kontakt gebracht werden, eine Temperatur von > 800 °C.

Dieses hohe Temperaturniveau lässt sich allein durch Vorwärmung des Erdgases in üblichen, medienbeheizten Wärmetauschern nicht erreichen. Derartige Wärmetauscher erreichen bereits bei Temperaturen von etwa 600 °C für die aufzuwärmenden Medien ihre Einsatzgrenzen. Verantwortlich hierfür sind werkstofftechnische Limitierungen und große Unterschiede in den Wärmedehnungen der einzelnen Komponenten in den Apparaten, insbesondere beim An- und Abfahren. Darüber hinaus fehlen beim Anfahren der Reformer häufig die Wärmequellen, mit denen die hohen Temperaturen überhaupt bereit gestellt werden können.

Um die Reaktion zu starten, ist deshalb eine Zündvorrichtung erforderlich. In der Regel wird dies durch spezielle Anfahrbrenner gelöst, die mit eigenen Zündvorrichtungen ausgestattet sind. Die Anfahrbrenner müssen nach dem Aufwärmen des Reaktorraums wieder entfernt werden, um insbesondere die Zündvorrichtungen gegen die im Dauerbetrieb vorliegende Gasatmosphäre und die dauerhaft hohen Temperaturen zu schützen. Dies bedingt nach den Vorwärmphasen das Entspannen der Reaktoren zum Ausbau der Brenner und damit insgesamt recht zeitaufwändige Prozeduren.

Elektrische Vorwärmer erlauben Heizelementtemperaturen bis etwa 800 °C. Durch die für die Wärmeübertragung an das Prozessgas erforderlichen Temperaturdifferenzen zwischen den Heizelementen und dem Gas sowie den unvermeidlichen Wärmeverlusten bis zum Eintritt in den Reaktor ist die im Reaktor tatsächlich erreichbare Temperatur aber stets deutlich kleiner als die Heizelementtemperatur. Die Erfahrung hat außerdem gezeigt, dass die in den Reaktoren tatsächlich vorliegende Temperatur der Austrittstemperatur der Vorwärmer nur sehr zögerlich folgt. Ursache ist das Wärmeaufnahmevermögen der Zuleitungen und der keramischen Auskleidung des Reaktors. Aufgrund dieser Gegebenheiten kann in kleineren Reaktoren mit spezifisch großen Oberflächenverlusten die für Erdgas erforderliche Zündtemperatur nicht erreicht werden. Es ist auch zweifelhaft, dass dies bei großen Anlagenkapazitäten allein mit elektrischen Vorwärmern möglich ist. In jedem Fall ergibt sich durch die langen Aufwärmphasen und den großen elektrischen Energiebedarf ein sehr unwirtschaftliches Verfahren. Reaktor-interne elektrische Vorwärmer müssten - ähnlich wie Anfahrbrenner - nach erfolgter Vorwärmung ausgebaut werden.

In US 6,123,873 ist ein Verfahren zur Inbetriebnahme eines autothermen Reformers beschrieben, bei der ein aus Methanol und Dampf bestehendes Gas mit einem Methanisierungs-Katalysator in Kontakt gebracht wird, wobei das Gas eine Temperatur aufweist, die ausreichend hoch ist, um eine Zersetzungsreaktion des Methanols in Wasserstoff und Kohlenmonoxid mit weiterer Erwärmung zu initiieren und indem das heiße Gas anschließend in einen autothermen Reformer gegeben wird, wodurch dieser auf eine Temperatur aufgeheizt wird, die ausreichend ist, um eine Reformierungsreaktion zu starten und aufrecht zu erhalten. Der technische Aufwand zum Erreichen der notwendigen Zündtemperatur ist bei dieser Lösung allerdings sehr hoch.

US 2006/216562 und US 3,810,975 offenbaren Verfahren und Vorrichtungen zur Dampfreformierung.

Aufgabe der vorliegenden Erfindung ist es somit, ein apparativ möglichst einfaches alternatives Verfahren bereitzustellen, das es erlaubt eine Inbetriebnahme sicherzustellen, ohne dass ein aufwendiges An- und wieder Abfahren des autothermen Reaktors notwendig wird.

Die Aufgabe wird gelöst durch ein Verfahren zur Inbetriebnahme eines autothermen Reaktors für die Erzeugung von Synthesegas durch Reformierung von Kohlenwasserstoff-haltigen Einsatzgasen in einer Reaktionskammer, in der Oxidierungs- und Reformierungsreaktionen durchgeführt werden, indem ein Kohlenwasserstoff-haltiges Einsatzgas und Dampf, wobei der Wasserdampfgehalt bezogen auf das Kohlenwasserstoff-haltige Einsatzgas 0 - 80 Vol.% beträgt, und ein Oxidator, der einen Sauerstoffgehalt von 10 - 100 Vol. % aufweist, zugeführt werden und ein Produktgas erzeugt wird, wobei der autotherme Reaktor zur Inbetriebnahme zunächst mittels eines inerten Mediums auf > 600 °C vorgewärmt wird, und der Zündvorgang anschließend durch Einleiten eines ausreichend niedrig zündenden Gases oder Gasgemisches, das eine Zündtemperatur aufweist, die unterhalb der Zündtemperatur des Kohlenwasserstoffhaltigen Einsatzgases liegt, und das einen Anteil der niedrig zündenden Komponente von mindestens 40 Vol. % aufweist und durch Einleiten eines Oxidators, der einen Sauerstoffgehalt von 10 - 100 Vol. % aufweist, ausgelöst wird und anschließend durch Einleiten des Kohlenwasserstoff-haltigen Einsatzgases und Dampf die autotherme Reformierung gestartet wird.

Als reaktionsfreudige, d.h. bei niedriger Temperatur zündende Gase bzw. Gasgemische kommen hierbei insbesondere die höheren Kohlenwasserstoffe in Frage, deren Zündtemperaturen deutlich unter der von Methan liegen und bekanntermaßen mit zunehmender Kettenlänge abnehmen. Die Auswahl des Gases ist aber gleichzeitig ein Kompromiss bzgl. der Rußbildung im Reaktor, die mit der Kettenlänge zunimmt. Besonders kritisch in dieser Hinsicht und damit ungeeignet sind z.B. die ungesättigten Kohlenwasserstoffe. Ein guter Kompromiss ist deshalb die Verwendung von Propan bzw. eines Propan-haltigen Gasgemisches, wie beispielsweise von einem Propan/Butan-Gasgemisch, wobei der Propangehalt wenigstens 40 Vol% betragen sollte.

Die Versorgung mit dem Propan-haltigen Gasgemisch erfolgt dabei bevorzugt aus einem Vorratsbehälter.

Als inertes Medium zur Vorwärmung des Reaktors wird mit Vorteil ein nicht reagierendes Gas wie Stickstoff oder Kohlendioxid, ggf. auch Wasserdampf eingesetzt.

Mit Vorteil wird die Inbetriebnahme bei einem Druck von 1 - 10 bar abs., bevorzugt bei einem Druck von 1 - 5 bar abs. durchgeführt. Da der Anfahrvorgang im Vergleich zur autothermen Reformierungsreaktion, die bei Drücken von ca. 20 bis 100 bar durchgeführt wird, bei abgesenktem Druck durchgeführt wird und nur eine kurze Zeitdauer beansprucht, sind die dafür benötigten Mengen an niedrig zündenden Gasen oder Gasgemischen auch bei großen Reaktoren noch moderat.

Durch dieses Inbetriebnahmeverfahren kann der erhebliche technische Aufwand für das Erreichen der Zündtemperatur von Erdgas, d.h. im Wesentlichen von Methan vermieden werden. Die für das erfindungsgemäße Inbetriebnahmeverfahren erforderlichen zusätzlichen Zuführungseinrichtungen für das niedrig zündende, z.B. Propan-haltige Gasgemisch sind dagegen mit wesentlich geringerem technischem Aufwand, d.h. Kosten, zu realisieren und können weitgehend von der Hauptzuführung des Erdgas /Dampf-Gemisches getrennt ausgeführt werden.

In bevorzugter Ausgestaltung des erfindungsgemäßen Verfahrens werden das niedrig zündende, z.B. Propan-haltige Gasgemisch und das Kohlenwasserstoff-haltige Einsatzgas jeweils über separate Zuführungen zum Reaktor geleitet.

In weiterer Ausgestaltung werden die Zuleitungen des niedrig zündenden Gases oder Gasgemisches und des Kohlenwasserstoff-haltigen Einsatzgases über Ventile verriegelt, wobei ein Rückströmen des Kohlenwasserstoff-haltigen Einsatzgases, das einen höheren Druck als das niedrig zündende, Propan-haltige Gasgemisch aufweist, in die Zuleitung des niedrig zündenden Einsatzgases verhindert wird, indem die Ventile durch eine geeignete Steuerungseinrichtung gegeneinander verriegelt werden und eine Fehlbedienung durch das Anlagenfahrpersonal damit ausgeschlossen wird.

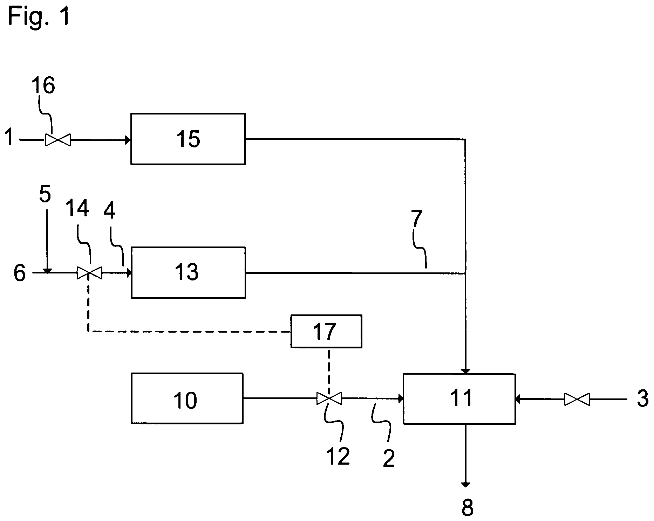

Nachfolgend soll die Erfindung anhand der Figur 1 näher beschrieben werden.

Fig. 1 : Ein vereinfachtes Anlagenschema eines Verfahrens zur erfindungsgemäßen Inbetriebnahme autothermer Reformierungsreaktionen.

Bei der in Fig. 1 dargestellten Anlage wird der autotherme Reaktor in einem ersten Schritt durch ein inertes Medium 1 auf eine Temperatur von > 600 °C gebracht, das anschließend aus dem autothermen Reaktor 11 über die Leitung 8 wieder abgeführt wird. Das inerte Medium 1 durchströmt hierzu den Vorwärmer 15. Sobald die gewünschte Temperatur im autothermen Reaktor 11 erreicht ist, wird diese Vorwärmung eingestellt, das Ventil 16 geschlossen und aus einem Vorratsbehälter 10 ein niedrig zündender Propan-haltiger Gasstrom 2 in den autothermen Reformer 11 gegeben. Dabei ist das Ventil 12 geöffnet. Der niedrig zündende Gasstrom 2 hat dabei einen Druck von 1 - 10 bar. Dem autothermen Reaktor 11 wird zudem ein Oxidator 3 zugeführt, der einen Sauerstoffgehalt von 10 - 100 Vol. % aufweist. Nach erfolgreichem Zündvorgang wird dieser Betriebszustand eine ausreichende Zeit aufrecht erhalten, bis eine Reaktortemperatur > 800 °C erreicht ist. Anschließend wird das Ventil 12 geschlossen und durch Öffnen des Ventils 14 ein Kohlenwasserstoff-haltiges Dampf/Einsatzgas-Gemisch 4, das einen Wasserdampfgehalt von 0 - 80 Vol. % aufweist und durch Mischen von Dampf 5 und Kohlenwasserstoff-haltigem Einsatzgas 6 generiert wird, in einen Erdgas/Dampf- Vorwärmer 13 geleitet. Dort wird es auf eine Temperatur zwischen 500 °C und 800 °C gebracht, um anschließend dem autothermen Reaktor 11 zugeführt zu werden. Im Hinblick auf die mechanische und thermische Belastung der Reaktor-ausmauerung ist es dabei zweckmäßig, das erhitzte Kohlenwasserstoff-haltige Dampf/Einsatzgas-Gemisch 7 zunächst mit einem niedrigen Druck einzuspeisen, vergleichbar dem des niedrig zündenden Gasstroms 2, und den Druck erst langsam auf den angestrebten Betriebswert zwischen 15 und 100 bar zu steigern. Um nun ein Rückströmen des erhitzten Kohlenwasserstoff-haltigen Dampf/Einsatzgas-Gemisch 7 zu verhindern, besitzen die Ventile 12 und 14 eine gegenseitige Verriegelung über die Steuerungseinheit 17, so dass sich bei Zuströmen des Kohlenwasserstoff-haltigen Einsatzgases und dem damit verbundenen Öffnen des Ventils 14 das Ventil 12 schließt und ein weiteres Zuführen des niedrig zündenden Gasstroms 2 unterbunden wird. Anschließend wird der autotherme Reaktor wie aus dem Stand der Technik bekannt betrieben und ein generiertes rohes Synthesegas über die Leitung 8 wird abgeführt.

Vorteile, die sich aus der Erfindung für die Inbetriebnahme eines ATR ergeben sind:
- kein aufwendiges An- und wieder Abfahren des autothermen Reaktors notwendig, das heißt signifikante Zeitersparnis beim Anfahren des Reaktors aus dem kalten Zustand
- ein leicht in bestehende Anlagen zu integrierender Prozess
- keine zusätzlichen Aggregate wie Anfahr- oder Zündbrenner erforderlich
- die erforderlichen leicht entzündlichen Medien sind praktisch überall auf der Welt vorhanden und daher leicht, schnell und kostengünstig zu beschaffen

### Bezugszeichenliste

1 inertes Medium
2 niedrig zündender Gasstrom
3 Oxidator
4 Kohlenwasserstoff-haltiges Dampf/Einsatzgas-Gemisch
5 Dampf
6 Kohlenwasserstoff-haltiges Einsatzgas
7 erhitztes Kohlenwasserstoff-haltiges Dampf/Einsatzgas-Gemisch
8 rohes Synthesegas
10 Vorratsbehälter für niedrig zündendes Gas
11 autothermer Reaktor
12 Ventil
13 Erdgas/Dampf-Vorwärmer
14 Ventil
15 elektrisch beheizter Vorwärmer
16 Ventil
17 Steuerungseinheit

## Patentansprüche

1. Verfahren zur Inbetriebnahme eines autothermen Reaktors für die Erzeugung von Synthesegas durch Reformierung von Kohlenwasserstoff-haltigen Einsatzgasen in einer Reaktionskammer, in der Oxidierungs- und Reformierungsreaktionen durchgeführt werden, indem ein Kohlenwasserstoff-haltiges Einsatzgas und Dampf, wobei der Wasserdampfgehalt bezogen auf das Kohlenwasserstoff-haltige Einsatzgas 0 - 80 Vol.% beträgt, und ein Oxidator, der einen Sauerstoffgehalt von 10 - 100 Vol. % aufweist, zugeführt werden und ein Produktgas erzeugt wird, wobei zur Inbetriebnahme ein Zündvorgang ausgelöst wird
**dadurch gekennzeichnet, dass**
der autotherme Reaktor zur Inbetriebnahme zunächst mittels eines inerten Mediums auf > 600 °C vorgewärmt wird, und
der Zündvorgang anschließend durch Einleiten eines ausreichend niedrig zündenden Gases oder Gasgemisches, das eine Zündtemperatur aufweist, die unterhalb der Zündtemperatur des Kohlenwasserstoff-haltigen Einsatzgases liegt und das einen Anteil der niedrig zündenden Komponente von mindestens 40 Vol. % aufweist, wobei als ausreichend niedrig zündendes Gas Propan eingesetzt wird oder als ausreichend niedrig zündendes Gasgemisch ein Propan-haltiges Gasgemisch, das einen Propan-Anteil von mindestens 40 Vol. % aufweist, eingesetzt wird, und durch Einleiten eines Oxidators, der einen Sauerstoffgehalt von 10 - 100 Vol. % aufweist, ausgelöst wird und anschließend durch Einleiten des Kohlenwasserstoff-haltigen Einsatzgases und Dampf die autotherme Reformierung gestartet wird.

2. Verfahren nach Anspruch 1, **dadurch gekennzeichnet, dass** die Inbetriebnahme bei einem Druck von 1 - 10 bar abs., bevorzugt bei einem Druck von 1 - 5 bar abs. durchgeführt wird.

3. Verfahren nach einem der Ansprüche 1 oder 2, **dadurch gekennzeichnet, dass** das niedrig zündende Gasgemisch und das Kohlenwasserstoff-haltige Einsatzgas jeweils über separate Zuführungen zum Reaktor geleitet werden.

4. Verfahren nach Anspruch 3, **dadurch gekennzeichnet, dass** die Zuleitungen des niedrig zündenden Gasgemisches und des Kohlenwasserstoff-haltigen Einsatzgases über Ventile verriegelt werden, wobei ein Rückströmen des Kohlenwasserstoff-haltigen Einsatzgases, das einen höheren Druck aufweist als das niedrig zündende Gasgemisch, in die Zuleitung des niedrig zündenden Gasgemisches verhindert wird, indem die Ventile durch eine Steuerungseinheit gegeneinander verriegelt werden.

5. Verfahren nach einem der vorstehenden Ansprüche, **dadurch gekennzeichnet, dass** als ausreichend niedrig zündendes Gasgemisch ein Propan/Butan-Gasgemisch eingesetzt wird.

6. Verfahren nach einem der vorstehenden Ansprüche, **dadurch gekennzeichnet, dass** als inertes Medium zur Vorwärmung des Reaktors ein Gas ausgewählt aus der Gruppe Stickstoff, Kohlendioxid und Wasserdampf eingesetzt wird.

7. Verfahren nach einem der vorstehenden Ansprüche, **dadurch gekennzeichnet, dass** die Zugabe des niedrig zündenden Gases oder Gasgemisches aus einem Vorratsbehälter erfolgt.

## Claims

1. Process for startup of an autothermal reactor for the generation of synthesis gas by reforming of hydrocarbon-containing input gases in a reaction chamber in which oxidation and reforming reactions are performed, wherein a hydrocarbon-containing input gas and steam, wherein the water vapour content based on the hydrocarbon-containing input gas is 0-80 vol%, and an oxidizer having an oxygen content of 10-100 vol%, are supplied and a product gas is generated, wherein for startup an ignition procedure is initiated,
**characterized in that**
for startup the autothermal reactor is initially pre-heated to >600°C by means of an inert medium and the ignition procedure is subsequently initiated by introduction of a sufficiently low ignition temperature gas or gas mixture which has an ignition temperature below the ignition temperature of the hydrocarbon-containing input gas and which comprises a proportion of the low ignition temperature component of at least 40 vol%, wherein as the sufficiently low ignition temperature gas propane is employed or as the sufficiently low ignition temperature gas mixture a propane-containing gas mixture comprising a propane proportion of at least 40 vol% is employed, and by introduction of an oxidizer having an oxygen content of 10-100 vol% and subsequently by introduction of the hydrocarbon-containing input gas and steam the autothermal reforming is commenced.

2. Process according to Claim 1, **characterized in that** the startup is performed at a pressure of 1-10 bar abs., preferably at a pressure of 1-5 bar abs.

3. Process according to either of Claims 1 and 2, **characterized in that** the low ignition temperature gas mixture and the hydrocarbon-containing input gas are each passed to the reactor via separate supply means.

4. Process according to Claim 3, **characterized in that** the feeds of the low ignition temperature gas mixture and of the hydrocarbon-containing input gas are locked via valves, wherein a backflow of the hydrocarbon-containing input gas, which has a higher pressure than the low ignition temperature gas mixture, into the feed of the low ignition temperature gas mixture is prevented by locking the valves with respect to one another via a control unit.

5. Process according to any of the preceding claims, **characterized in that** as the sufficiently low ignition temperature gas mixture a propane/butane gas mixture is employed.

6. Process according to any of the preceding claims, **characterized in that** as the inert medium for preheating the reactor a gas selected from the group nitrogen, carbon dioxide and water vapour is employed.

7. Process according to any of the preceding claims, **characterized in that** the addition of the low ignition temperature gas or gas mixture takes place from a storage vessel.

## Revendications

1. Procédé de mise en service d'un réacteur autotherme destiné à la production de gaz de synthèse par reformage de gaz de départ contenant des hydrocarbures dans une chambre de réaction, dans laquelle des réactions d'oxydation et de reformage sont réalisées, par introduction d'un gaz de départ contenant des hydrocarbures et de vapeur, la teneur en vapeur d'eau par rapport au gaz de départ contenant des hydrocarbures étant de 0 à 80 % en volume, et d'un oxydant, qui présente une teneur en oxygène de 10 à 100 % en volume, et formation d'un produit gazeux, un processus d'allumage étant déclenché pour la mise en service,
**caractérisé en ce que**
le réacteur autotherme est tout d'abord préchauffé à > 600 °C au moyen d'un milieu inerte pour la mise en service,
puis le processus d'allumage est déclenché par introduction d'un gaz ou d'un mélange gazeux à point d'allumage suffisamment bas, qui présente une température d'allumage inférieure à la température d'allumage du gaz de départ contenant des hydrocarbures, et qui présente une proportion en composant à point d'allumage bas d'au moins 40 % en volume, le propane étant utilisé en tant que gaz à point d'allumage suffisamment bas, ou un mélange gazeux contenant du propane qui présente une proportion de propane d'au moins 40 % en volume étant utilisé en tant que mélange gazeux à point d'allumage suffisamment bas, et par introduction d'un oxydant qui présente une teneur en oxygène de 10 à 100 % en volume, puis le reformage autotherme est démarré par introduction du gaz de départ contenant des hydrocarbures et de la vapeur.

2. Procédé selon la revendication 1, **caractérisé en ce que** la mise en service est réalisée à une pression de 1 à 10 bar abs., de préférence à une pression de 1 à 5 bar abs.

3. Procédé selon l'une quelconque des revendications 1 ou 2, **caractérisé en ce que** le mélange gazeux à point d'allumage bas et le gaz de départ contenant des hydrocarbures sont chacun introduits par des alimentations séparées dans le réacteur.

4. Procédé selon la revendication 3, **caractérisé en ce que** les conduites d'alimentation du mélange gazeux à point d'allumage bas et du gaz de départ contenant des hydrocarbures sont bloquées par des vannes, un écoulement de retour du gaz de départ contenant des hydrocarbures, qui présente une pression plus élevée que le mélange gazeux à point d'allumage bas, dans la conduite d'alimentation du mélange gazeux à point d'allumage bas étant évité par blocage des vannes les unes par rapport aux autres par une unité de commande.

5. Procédé selon l'une quelconque des revendications précédentes, **caractérisé en ce qu'**un mélange gazeux de propane/butane est utilisé en tant que mélange gazeux à point d'allumage suffisamment bas.

6. Procédé selon l'une quelconque des revendications précédentes, **caractérisé en ce qu'**un gaz choisi dans le groupe constitué par l'azote, le dioxyde de carbone et la vapeur d'eau est utilisé en tant que milieu inerte pour le préchauffage du réacteur.

7. Procédé selon l'une quelconque des revendications précédentes, **caractérisé en ce que** l'ajout du gaz ou mélange gazeux à point d'allumage bas a lieu à partir d'un contenant de stockage.
